# EUROPEAN PATENT SPECIFICATION

(11) **EP 2 659 537 B1**
(45) Date of publication and mention of the grant of the patent: **29.07.2015**
(21) Application number: 11827779.7
(22) Date of filing: 28.11.2011
(51) Int. Cl.: H01M 8/04, H01M 8/06, C01B 3/38, H01M 8/12

(54) **CONTROL ARRANGEMENT FOR CONTROLLING OXIDATION OF A REFORMER AND METHOD FOR CONTROLLING OXYGEN CONTENT**
STEUERANORDNUNG ZUR STEUERUNG DER OXIDIERUNG EINES REFORMERS UND VERFAHREN ZUR STEUERUNG EINES SAUERSTOFFGEHALTS
SYSTÈME DE COMMANDE POUR COMMANDER L'OXYDATION D'UN REFORMEUR ET PROCÉDÉ DE COMMANDE DE LA TENEUR EN OXYGÈNE

(30) Priority: 31.12.2010 FI 20106398
(43) Date of publication of application: 06.11.2013
(73) Proprietor: Convion Oy, 02150 Espoo (FI)
(72) Inventor: KIVISAARI, Timo, 00630 Helsinki (FI); HAKALA, Tuomas, 00330 Helsinki (FI); HOTTINEN, Tero, 08680 Lohja (FI); ÅSTRÖM, Kim, 02460 Kirkkonummi (FI)
(74) Representative: LEITZINGER OY
(86) International application number: PCT/FI2011/051052
(87) International publication number: WO 2012/089909

(56) References cited:
- EP-A1- 1 659 095
- US-A1- 2002 150 532
- US-A1- 2003 003 332
- US-A1- 2010 152 021

## Description

### The field of the invention

Most of the energy of the world is produced by means of oil, coal, natural gas or nuclear power. All these production methods have their specific problems as far as, for example, availability and friendliness to environment are concerned. As far as the environment Is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed. Fuel cell's, by means of which energy of fuel, for example blogas, is directly converted to electricity via a chemical reaction In an environmentally friendly process, are promising future energy conversion devices.

### The state of the art

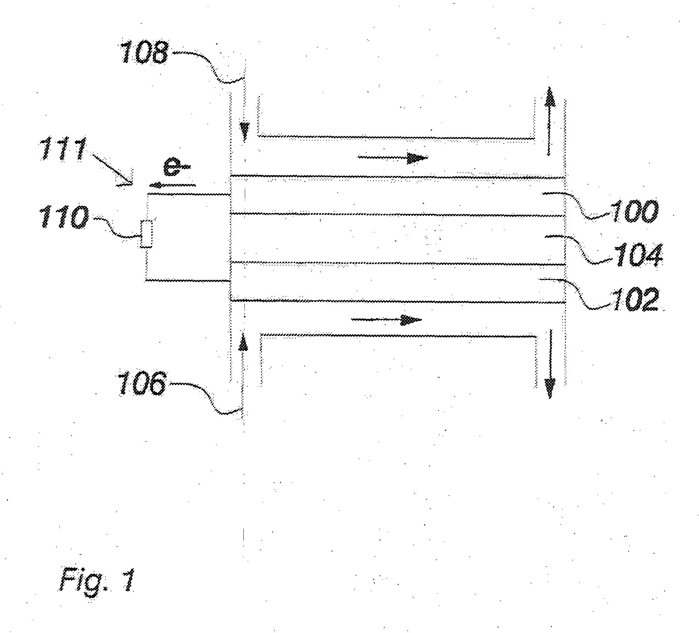

Fuel cell, as presented In fig 1, comprises an anode side 100 and a cathode side 102 and an electrolyte material 104 between them. In solid oxide fuel cells (SOFCs) oxygen 106 is fed to the cathode side 102 and it is reduced to a negative oxygen ion by receiving electrons from the cathode. The negative oxygen ion migrates through the electrolyse material 104 to the anode side 100 where it reacts with fuel 108 producing water and also typically carbon dioxide (CO2). Between anode 100 and cathode 102 is an external electric circuit 111 comprising a load 110 for the fuel cell.

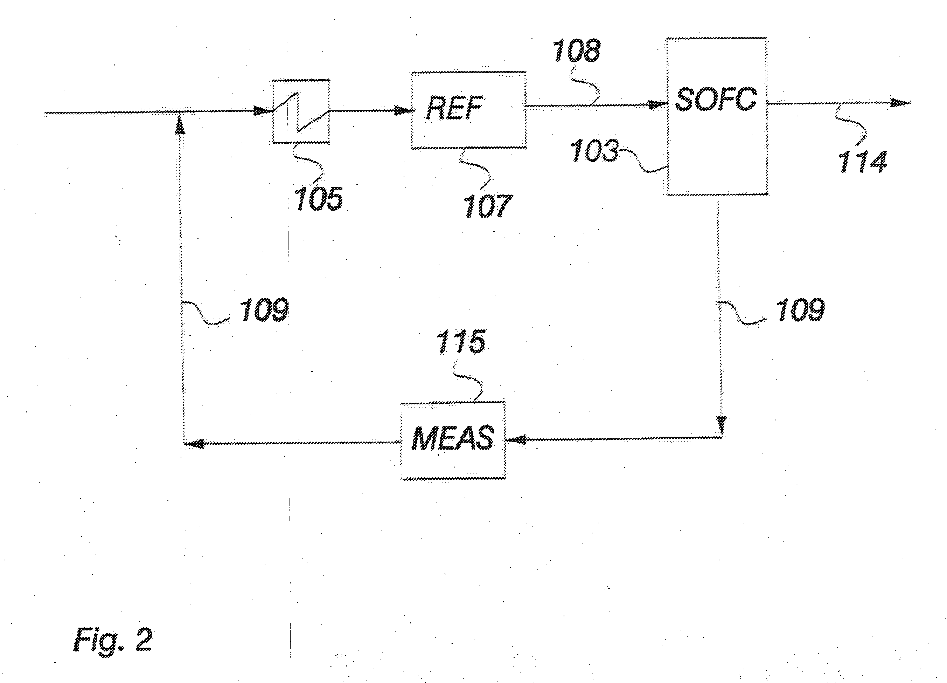

In figure 2 is presented a SOFC device as an example of a high temperature fuel cell device. SOFC device can utilize as fuel for example natural gas, bio gas, methanol or other carbon and hydrogen containing compounds. SOFC device in figure 2 comprises more than one, typically plural of fuel cells in stack formation 103 (SOFC stack). Each fuel cell comprises anode 100 and cathode 102 structure as presented in figure 1. Part of the used fuel can be recirculated in feedback arrangement 109 through each anode. SOFC device In fig 2 also comprises a fuel heat exchanger 105 and a reformer 107. Typically several heat exchangers are used for controlling thermal conditions at different locations in a fuel cell process. The reformer 107, i.e. steam reformer, is a device that converts the fuel such as for example natural gas to a composition suitable for fuel cells, for example to a composition containing hydrogen, methane, carbon dioxide, carbon monoxide and Inert gases. Anyway in each SOFC device it is though not necessary to have a steam reformer.

For example inert gases are purge gases or part of purge gas compounds used in fuel cell technology. For example nitrogen is a typical inert gas used as purge gas in fuel cell technology. Purge gases are not necessarily elemental and they can be also gas mixtures of varying compositions.

By using measurement means 115 (such as fuel flow meter, current meter and temperature meter) necessary measurements are carried out for the operation of the SOFC device. Part of the gas used at anodes 100 may be recirculated through anodes in feedback arrangement 109 and the other part of the gas is exhausted 114 from the anodes 100.

A solid oxide fuel cell (SOFC) device Is an electrochemical conversion device that produces electricity directly from oxidizing fuel. Advantages of SOFC device include high efficiencies, long term stability, low emissions, and cost. The main disadvantage is the high operating temperature which results in long start up times and both mechanical and chemical compatibility tissues.

During the operation of the steam reformer 107 in a fuel cell system, carbonaceous residues formed from the hydrocarbon fuel as well as hydrogen adsorb to the nickel based catalyst. These residues, hydrogen and the highly dispersed nickel Itself form a highly pyrophoric mixture, which may self ignite in the presence of oxygen (i.e. air). In order to avoid the hazard of oxygen intrusion into the steam reformer and its catalyst, the steam reformer content Is oxidised in controlled conditions, I.e. carbonaceous residues are oxidized to carbon dioxide and water; hydrogen is oxidized to water; and the nickel content of the catalyst Is surface oxidized into nickel oxide (NiO) at a rate, which is not incontrollable. In a laboratory environment this is easily done by mixing pipeline nitrogen with compressed air in desired proportions, but in a field application environment it would be a very unpractical arrangement as significant amounts of nitrogen and potentially also oxygen have to be supplied from gas bottles.

Document US5356845 discloses a process for the reactivation of nickel-alumina catalysts.

### Short description of the invention

The object of the invention is to accomplish a control arrangement for controlling oxygen content during steam reformer oxidation so that safety requirements are fulfilled surely enough. This is achieved by a control arrangement for controlling oxidation of a steam reformer in a fuel cell system, each fuel cell in the fuel cell system comprising an anode side, a cathode side, and an electrolyte between the anode side and the cathode side, and the fuel cell system comprising a main pipe line for flowing fuel in the fuel cell system and the steam reformer for converting the fuel to a composition suitable for the fuel cells. The control arrangement comprises an oxygen source for providing oxygen in the control arrangement, a diluting gas source for providing diluting gas In the control arrangement, means connected to both the oxygen source and to the diluting gas source for mixing oxygen from the oxygen source and gas being circulated back from the steam reformer in the control arrangement into diluting gas from the diluting gas source to provide feeding of oxidation gas to the steam reformer, means for forming oxygen content information from the gas circulation of the control arrangement, and control means for controlling oxygen content of the gas circulation by controlling at least the amount of provided oxygen into the feeding of oxidation gas to the steam reformer on the basis of the oxygen content information.

The focus of the Invention is also a method to control oxidation of a steam reformer in a fuel cell system, in which method fuel is flown In a main pipe line of the fuel cell system, and the fuel is converted to a composition suitable for the fuel cells. In the oxidation controlling Is circulated gas Into the steam reformer and out from the steam reformer, is provided oxygen, is provided diluting gas, is mixed the provided oxygen and gas being circulated out from the steam reformer Into said provided diluting gas to provide feeding of oxidation gas to the steam reformer, is formed oxygen content Information from the gas circulation, and the oxygen content of the gas circulation is controlled by controlling at least the amount of provided oxygen Into the feeding of oxidation gas to the steam reformer on the basis of the oxygen content information.

The invention is based on utilization of a control arrangement, which comprises means connected to both an oxygen source and to a diluting gas source for mixing oxygen from the oxygen source and gas being circulated back from the steam reformer in the control arrangement Into diluting gas from the diluting gas source to provide feeding of oxidation gas to the steam reformer. The control arrangement controls oxygen content of the gas circulation by controlling at least the amount of provided oxygen into the feeding of oxidation gas to the steam reformer on the basis of the oxygen content information.

The control arrangement according to the invention is reliable and cost-effective, because both material cost savings and time savings can be achieved in a safe and reliable manner.

### Short description of figures

- Figure 1: presents a single fuel cell structure.
- Figure 2: presents an example of a SOFC device.
- Figure 3: presents a first preferred embodiment according to the present invention.
- Figure 4: presents a second preferred embodiment according to the present invention.

### Detailed description of the invention

Solid oxide fuel cells (SOFCs) can have multiple geometries. The planar geometry (Fig 1) is the typical sandwich type geometry employed by most types of fuel cells, where the electrolyte 104 Is sandwiched in between the electrodes, anode 100 and cathode 102. SOFCs can also be made in tubular geometries where for example either air or fuel is passed through the inside of the tube and the other gas Is passed along the outside of the tube. This can be also arranged so that the gas used as fuel is passed through the inside of the tube and air Is passed along the outside of the tube. Other geometries of SOFCs induce modified planar cells (MPC or MPSOFC), where a wave-like structure replaces the traditional flat configuration of the planar cell. Such designs are promising, because they share the advantages of both planar cells (low resistance) and tubular cells.

The ceramics used in SOFCs do not become ionically active until they reach a very high temperature and as a consequence of this the stacks have to be heated to temperatures ranging from 600 to 1,000 °C. Reduction of oxygen 106 (Fig. 1) into oxygen Ions occurs at the cathode 102. These ions can then be transferred through the solid oxide electrolyte 104 to the anode 100 where they can electrochemically oxidize the gas used as fuel 108. In this reaction, water and carbon dioxide byproducts are given off as well as two electrons. These electrons then flow through an external circuit 111 where they can be utilized. The cycle then repeats as those electrons enter the cathode material 102 again.

In large solid oxide fuel cell systems typical fuels are natural gas (mainly methane), different biogases (mainly nitrogen and/or carbon dioxide diluted methane), and other carbon and hydrogen containing compounds containing fuels, also including alcohols. Methane and higher hydrocarbons need to be reformed either in the steam reformer 107 (Fig 2) before entering the fuel cell stacks 103 or (partially) internally within the stacks 103. The steam reforming reactions require certain amount of water, and additional water is also needed to prevent possible carbon formation (coking) caused by higher hydrocarbons. This water can be provided internally by circulating the anode exhaust flow, because water Is produced In excess amounts In fuel cell reactions, and/or said water can be provided with an auxiliary water feed (e.g. direct fresh water feed or circulation of exhaust condensate). By anode recirculation arrangement also part of the unused fuel and dilutants In anode gas are fed back to the process, whereas in auxiliary water feed arrangement only additive to the process Is water.

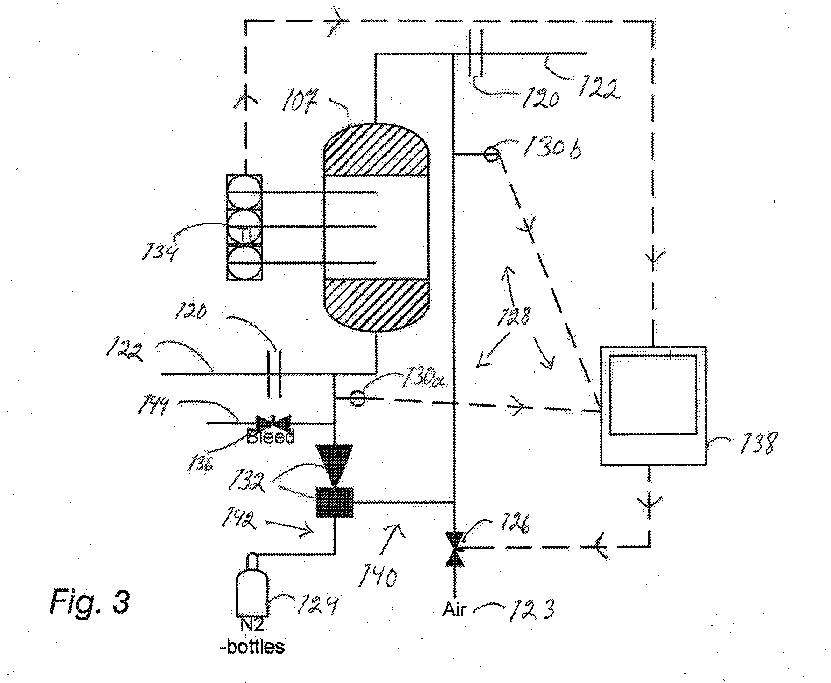

In figure 3 is presented a first preferred embodiment according to the present invention. In this embodiment is first isolated the steam reformer 107, i.e. the pre-steam reformer, from the rest of the fuel cell system by inserting blind flanges 120 Into the main pipes 122, thus ensuring that oxygen can not access the steam reformer if other parts of the fuel cell system is opened to the surroundings. It is also possible to use for example shut-off valves located in the surroundings of the steam reformer 107 to perform the same function as the blind flanges 120.

After the steam reformer 107 is isolated from the rest of the fuel cell system, an oxygen control arrangement 128 as described In the figure 3 is attached to the steam reformer 107. The control arrangement 128 can be arranged as separate arrangement as in the embodiment of figure 3, or the anode feedback arrangement 109 (Fig 2) can be used to perform steam reformer 107 oxidation functions according to the invention. Diluting gas in this preferred embodiment is nitrogen, which is provided from a nitrogen (N2) bottle 124, i.e. from a diluting gas source 124, to the gas circulation of the control arrangement 128. In embodiments according to the invention it is possible to use also other gas such as for example some inert gas as diluting gas.

In the preferred embodiment of figure 3 the means 132 for mixing comprise an ejector 132, which utilizes gas from the pressurized nitrogen source 124 as motive fluid to entrain into the feeding of oxidation gas to the steam reformer 107 a mixture of gas from an oxygen source 123 and gas being circulated back from the steam reformer 107 in the gas circulation of the control arrangement 128. Suction of said mixture is preferably as high as possible compared to the dispensed nitrogen amount, I.e. an entrainment ratio of the ejector 132 Is high, and there is no need to separately control an optimized nitrogen pressure. The entrainment ratio of the ejector, Wᵥ / Wₛ, is defined as the amount of motive fluid Wₛ (in kg/s) required to entrain and compress a given amount Wᵥ (in kg/s) of the suction mixture fluid. The control arrangement 128 can comprise a pressure reducer in the nitrogen source connection 142 for providing nitrogen into the gas circulation of the control arrangement 128 through the ejector 132, which is optimized to an output of the pressure reducer.

In the preferred embodiment of figure 3 the oxygen source 123 is preferably an air source, but it can be also for example an oxygen (02) bottle. This preferred embodiment comprises after the oxygen source 123 a controllable oxygen inlet valve 126, which have a gas circulation connection 140 to the ejector 132. The oxygen inlet valve 126 can be for example an air valve throttling ambient air feed driven by the suction generated by the ejector.

The control of oxygen content can be based on an advance calculations performed by at least one computer. The advance calculations give at least a basis on approximate estimates of oxygen contents in different pressure and nitrogen amount conditions. The control arrangement 128 utilizes said approximate estimates of oxygen contents to control oxygen content in the gas circulation by controlling inlet amount of oxygen through the oxygen inlet valve 126 by utilizing control means 138 manually or by using a processor based control means 138, I.e. a programmable logic controller (PLC) 138. So the control means 138 symbolize also possible manual control means 138. This Is the most simple embodiment, because PLC 138 does not need to calculate based on measurements or PLC does not need to feedback control anything. It would be also possible to utilize a predetermined oxygen content profile. The oxygen content is controlled actively according to said profile by utilizing also oxygen content measurements performed by at least one oxygen sensor, which is for example a lambda-sensor.

In the first preferred embodiment presented in the figure 3, the control of oxygen content is based on oxygen measurements performed by at least one oxygen-sensor 130(a, b). Preferably oxygen contents are measured by using two lambda-sensors 130a, 130b as oxygen-sensors. The first lambda-sensor 130a locates between the ejector 132 and the steam reformer 107, and the second lambda-sensor 130b locates on the other side of the steam reformer 107 as the first lambda-sensor 130a. On the basis of the measurements performed by these two lambda-sensors, the consumption of oxygen in oxidation reactions of the steam reformer 107 can be monitored. Using the temperature indicators 134 located within the catalyst bed of the steam reformer 107, temperature within the catalyst bed can be followed, and if the temperature would start to rise too rapidly, the oxygen inlet valve 126 can be closed, and thus oxidation reaction rate and temperature rise in the steam reformer 107 can be kept within desired values. If oxygen contents measured by the first 130a and the second 130b lambda-sensor are same, oxygen amount of the gas circulation can be increased for example by 2%.

The control of oxygen content based on the advance calculation or based on the measurements is preferably performed by using control means 138, which Is preferably part of an automation system of the fuel cell system. The control means is for example a control computer.

In the first preferred embodiment presented in figure 3 there Is a need for a bleed valve 136 located in a bleed pipe 144 in order to vent formed oxidation products from the system to prevent build-up of reaction products. During the use of the embodiment related to figure 3 different sensors and valves can be attached and controlled by the automation system of the fuel cell system, or they can be also locally measured and adjusted enabling independent operation. The presented figure 3 is exemplary one, and for example the fuel flow can be directed to an opposite direction, i.e. oxygen and nitrogen entering at the top of the steam reformer 107 and exiting from the bottom.

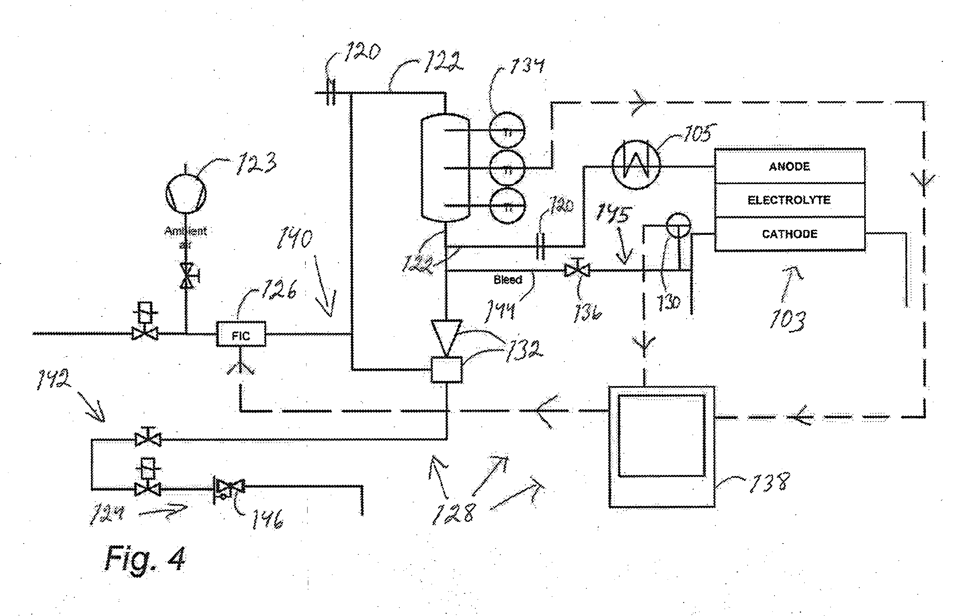

In figure 4 is presented a second preferred embodiment according to the present invention. The arrangement in figure 4 can comprise a bleed valve 136 located in a bleed pipe 144 in order to vent formed oxidation products from the system to prevent build-up of reaction products. When a controlled FIC (Flow Indicator and Controller) 126 is used to perform same kind of function as the controlled oxygen inlet valve 126 related to figure 3, the bleed valve 136 can be replaced by a shut off valve. When the bleed valve 136 is used, the means for forming oxygen content information from the gas circulation of the control arrangement 128 comprise an oxygen-sensor 130, i.e. preferably a lambda-sensor 130, located in the bleed pipe 144 for measuring oxygen content information of the steam reformer 107 gas feed when the FIC 126 is open. The oxygen sensor 130 is preferably located In an exhaust side 145 of the bleed valve 136. The bleed pipe 144 can be directed for example to a cathode side output of the stacks 103, where exist also other needs for the oxygen sensor 130. It is also possible that the oxygen sensor would replace a flow indicator in the output of the air utilization unit.

According to the preferred embodiment of the figure 4 In the control means 138, or in some other computer, is calculated oxygen consumption on the basis of the rate of descent of the oxygen content when the FIC Is closed knowing the provided nitrogen amount to the gas circulation and the volume of the gas circulation pipes. The provided nitrogen amount Is measured for example by using a controlled inlet valve also in the inlet of nitrogen from the nitrogen source 124 to the gas circulation of the control arrangement 128 or alternatively calculated based on known ejector characteristics and nitrogen pressure level. Alternatively the control arrangement 128 comprises a pressure reducer 146 in the nitrogen source connection 142 for providing nitrogen into the gas circulation of the control arrangement 128. Means for cathode side purging, already existing in the system can be used to accomplish the nitrogen source connection 142 and the pressure reducer 146. Some control device already existing in the fuel cell device can be utilized for controlling the amount of oxygen feed. For example a purge gas feed In controller, an Input of which being opened to air and possible aided with a blower, can be utilized as oxygen intent control means.

In the possible embodiments according to the invention it is not necessary to isolate the steam reformer 107 from the rest of the fuel cell system, but in most embodiments is utilized the means 120 for closing the main pipe line 122 at least in one of the locations before the steam reformer 107 or after the steam reformer. A benefit of the capability to isolating the steam reformer from the rest of the system while carrying out the oxidation Is that potential leakages or other failures in other parts of the system do not hamper the oxidation process. Means within the system for circulating anode gas could, in turn, be used to facilitate the steam reformer circulation for the oxidation process if the oxidation gas can be allowed to circulate through all components within the anode circulation loop. Bypass pipe arrangements within the anode circulation loop can be utilized to allow for isolating the steam reformer from the rest of the system while still keeping the anode circulator within the oxidation loop.

In the most simple arrangement according to the invention, the arrangement is operated in so called single pass mode, and the function of the ejector 132 Is only to the suction of oxygen, I.e. air, to the steam reformer 107 to perform the steam reformer oxidation.

Although the Invention has been presented in reference to the attached figures and specification, the Invention Is by no means limited to those as the invention is subject to variations within the scope allowed for by the claims.

## Claims

1. A control arrangement for controlling oxidation of a steam reformer (107) in a fuel cell system, each fuel cell in the fuel cell system comprising an anode side (100), a cathode side (102), and an electrolyte (104) between the anode side and the cathode side, and the fuel cell system comprising a main pipe line (122) for flowing fuel in the fuel cell system and the steam reformer (107) for converting the fuel to a composition suitable for the fuel cells, **characterised by**, that the control arrangement (128) comprises an oxygen source (123) for providing oxygen in the control arrangement (128), a diluting gas source (124) for providing diluting gas in the control arrangement (128), means (132) connected to both the oxygen source (123) and to the diluting gas source (124) for mixing oxygen from the oxygen source (123) and gas being circulated back from the steam reformer (107) in the control arrangement (128) into diluting gas from the diluting gas source (124) to provide feeding of oxidation gas to the steam reformer (107), means for forming oxygen content information from the gas circulation of the control arrangement (128), and control means (138) for controlling oxygen content of the gas circulation by controlling at least the amount of provided oxygen into the feeding of oxidation gas to the steam reformer (107) on the basis of the oxygen content information.

2. A control arrangement for controlling oxidation of a steam reformer (107) in a fuel cell system In accordance with claim 1, **characterized by**, that the control arrangement comprises means (120) for closing the main pipe line (122) at least in one of the locations before the steam reformer (107) and after the steam reformer, and the control arrangement (128) being taken into service in the fuel cell system after said closing of the main pipe line (122).

3. A control arrangement for controlling oxidation of a steam reformer (107) in a fuel cell system in accordance with claim 1, charactarized by, that the means (132) for mixing comprise an ejector (132) utilizing gas from a pressurized diluting gas source (124) as motive fluid to entrain into the feeding of oxidation gas to the steam reformer (107) a mixture of gas from the oxygen source (123) and gas being circulated back from the steam reformer (107).

4. A control arrangement for controlling oxidation of a steam reformer (107) in a fuel cell system in accordance with claim 1, **characterized by**, that the means for forming oxygen content information from the gas circulation of the control arrangement (128) comprise at least one oxygen-sensor (130) for measuring oxygen content from the gas circulation at least in one of the locations before and after the steam reformer (107).

5. A control arrangement for controlling oxidation of a steam reformer (107) In a fuel cell system in accordance with claim 4, **characterized by**, that the means for forming oxygen content information from the gas circulation of the control arrangement (128) comprise a first oxygen-sensor (130a) located between the means (132) and the steam reformer (107), and a second oxygen-sensor (130b) located on the other side of the steam reformer (107) as the first oxygen-sensor (130a).

6. A control arrangement for controlling oxidation of a steam reformer (107) in a fuel cell system In accordance with claim 1, **characterized by**, that the means for forming oxygen content information from the gas circulation of the control arrangement (128) utilize at least one computer for performing advance calculations giving approximate estimates of oxygen contents in different pressure and diluting gas amount conditions in the control arrangement, said approximate estimates of oxygen contents being utilized in the control means (128) to control oxygen content in the gas circulation by controlling inlet amount of oxygen.

7. A control arrangement for controlling oxidation of a steam reformer (107) in a fuel cell system in accordance with claim 1, **characterized by**, that the control arrangement comprises a bleed valve (136) located In a bleed pipe (144) to vent formed oxidation products from the control arrangement in order to prevent build-up of reaction products.

8. A control arrangement for controlling oxidation of a steam reformer (107) in a fuel cell system in accordance with claim 7, **characterized by**, that the means for forming oxygen content information from the gas circulation of the control arrangement (128) comprise an oxygen-sensor (130) located In the bleed pipe (144) for measuring oxygen content information of the steam reformer gas feed when the oxygen inlet valve (126) is open and to calculate In the control means (138) oxygen consumption on the basis of the rate of descent of the oxygen content when the oxygen inlet valve is closed knowing the provided nitrogen amount to the gas circulation and the volume of the gas circulation pipes.

9. A control arrangement for controlllng oxidation of a steam reformer (107) in a fuel cell system in accordance with claim with claim 1, **characterized by**, that the control arrangement comprises a pressure reducer (146) in the nitrogen source connection (142) for providing nitrogen Into the gas circulation of the control arrangement (128).

10. A control arrangement for controlling oxidation of a steam reformer (107) in a fuel cell system In accordance with claim 1, **characterized by**, that the control arrangement (128) comprises temperature indicators (134) located within a catalyst bed of the steam reformer (107) for following the catalyst temperature to control the oxygen inlet valve (126) in order to keep oxidation reaction rate and temperature conditions In the steam reformer (107) within determined values.

11. A method to control oxidation of a steam reformer (107) in a fuel cell system, in which method fuel is flown in a main pipe line (122) of the fuel cell system, and the fuel is converted to a composition suitable for the fuel cells, **characterized by**, that in the oxidation controlling, gas is circulated into the steam reformer (107) and out from the steam reformer (107), oxygen is provided, diluting gas is provided, the provided oxygen and gas being circulated out from the steam reformer (107) are mixed into said provided diluting gas to provide feeding of oxidation gas to the steam reformer (107), oxygen content information of the gas circulation is formed, and the oxygen content of the gas circulation is controlled by controlling at least the amount of provided oxygen into the feeding of oxidation gas to the steam reformer (107) on the basis of the oxygen content information.

12. A method in accordance with claim 11, **characterized by**, that in the method the main pipe line (122) is closed at least in one of the locations before the steam reformer (107) and after the steam reformer, and oxidation controlling of the steam reformer (107) is taken into service in the fuel cell system after said closing of the main pipe line (122).

13. A method in accordance with claim 11, **characterized by**, that In the oxidation controlling said mixing is performed by ejecting a mixture of the provided oxygen and the gas being circulated out from the steam reformer (107)
so that the provided diluting gas is pressurized and the pressurized gas is utilized as motive fluide to entrain into the feeding of oxidation gas to the steam reformer (107).

14. A method in accordance with claim 11, **characterised by**, that oxygen content information from the gas circulation is formed by using at least one oxygen-sensor (130), which measures oxygen content from the gas circulation at least in one of the locations before and after the steam reformer (107).

15. A method in accordance with claim 11, **characterized by**, that oxygen content information from the gas circulation is formed by using a first oxygen-sensor (130a) to measure oxygen content from the gas circulation before the steam reformer (107) and by using a second oxygen-sensor (130b) to measure oxygen content from the gas circulation on the other side of the steam reformer (107) as the first oxygen-sensor (130a).

16. A method in accordance with claim 11, **characterized by**, that oxygen content information from the gas circulation is formed by performing advance calculations, which give approximate estimates of oxygen contents in different pressure and diluting gas amount conditions, and said approximate estimates of oxygen contents are utilized to control oxygen content in the gas circulation by controlling inlet amount of oxygen.

17. A method in accordance with claim 11, **characterized by**, that formed oxidation products are vented from the gas circulation through a bleed (136) in order to prevent build-up of redaction products.

18. A method In accordance with claim 11, **characterized by**, that oxygen content information is formed from the gas circulation by using an oxygen-sensor (130), which locates in a bleed pipe (144) and measures oxygen content information of the steam reformer gas feed when oxygen is fed In and oxygen consumption is calculated on the basis of the rate of descent of the oxygen. content when oxygen is not fed in knowing the provided nitrogen amount to the gas circulation and the volume of the gas circulation pipes.

19. A method In accordance with claim 11, **characterized by**, that pressure is reduced (146) in a nitrogen source connection (142) for providing nitrogen Into the gas circulation.

20. A method in accordance with claim 11, charaeterized by, that temperature of a catalyst bed of the steam reformer (107) is followed to control the inlet of oxygen in order to keep oxidation reaction rate and temperature conditions in the steam reformer (107) within determined values.

## Patentansprüche

1. Steueranordnung zum Steuern der Oxidation eines Dampfreformers (107) in einem Brennstoffzellensystem, wobei jede Brennstoffzelle in dem Brennstoffzellensystem eine Anodenseite (100), eine Kathodenseite (102) und einen Elektrolyt (104) zwischen der Anodenseite und der Kathodenseite umfasst, und das Brennstoffzellensystem eine Hauptleitung (122) für strömenden Brennstoff in dem Brennstoffzellensystem und dem Dampfreformer (107) zum Umwandeln des Brennstoffs in eine Zusammensetzung, die für die Brennstoffzellen geeignet ist, umfasst, **dadurch gekennzeichnet, dass** die Steueranordnung (128) eine Sauerstoffquelle (123) zum Bereitstellen von Sauerstoff in der Steuereinrichtung (128), eine Verdünnungsgasquelle (124) zum Bereitstellen von Verdünnungsgas in der Steueranordnung (128), Mittel (132), die mit sowohl der Sauerstoffquelle (123) als auch der Verdünnungsgasquelle (124) verbunden sind, um Sauerstoff von der Sauerstoffquelle (123) und Gas, das von dem Dampfreformer (107) in der Steueranordnung (128) zurück zirkuliert wird, in Verdünnungsgas von der Verdünnungsgasquelle (124) zu mischen, um eine Einspeisung von Oxidationsgas zum Dampfreformer (107) bereitzustellen, Mittel zum Bilden von Sauerstoffgehaltsinformationen von der Gaszirkulation der Steueranordnung (128) und Steuermittel (138) zum Steuern des Sauerstoffgehalts der Gaszirkulation durch Steuern von mindestens der Menge des bereitgestellten Sauerstoffs in die Einspeisung von Oxidationsgas zu dem Dampfreformer (107) auf der Grundlage der Sauerstoffgehaltsinformationen umfasst.

2. Steueranordnung zum Steuern der Oxidation eines Dampfreformers (107) in einem Brennstoffzellensystem nach Anspruch 1, **dadurch gekennzeichnet, dass** die Steueranordnung Mittel (120) zum Schließen der Hauptleitung (122) an mindestens einem der Orte vor dem Dampfreformer (107) und nach dem Dampferformer umfasst, und die Steueranordnung (128) nach dem Schließen der Hauptleitung (122) in dem Brennstoffzellensystem in Betrieb genommen wird.

3. Steueranordnung zum Steuern der Oxidation eines Dampfreformers (107) in einem Brennstoffzellensystem nach Anspruch 1, **dadurch gekennzeichnet, dass** die Mittel (132) zum Mischen einen Ejektor (132) umfassen, der Gas von einer unter Druck stehenden Verdünnungsgasquelle (124) als Treibfluid zum Mitnehmen einer Mischung von Gas von der Sauerstoffquelle (123) und Gas, das von dem Dampfreformer (107) zurück zirkuliert wird, in die Einspeisung von Oxidationsgas in den Dampfreformer (107) nutzt.

4. Steueranordnung zum Steuern der Oxidation eines Dampfreformers (107) in einem Brennstoffzellensystem nach Anspruch 1, **dadurch gekennzeichnet, dass** die Mittel zum Bilden von Sauerstoffgehaltsinformationen von der Gaszirkulation der Steueranordnung (128) mindestens einen Sauerstoffsensor (130) zum Messen von Sauerstoffgehalt von der Gaszirkulation zumindest an einem der Orte vor und nach dem Dampfreformer (107) umfassen.

5. Steueranordnung zum Steuern der Oxidation eines Dampfreformers (107) in einem Brennstoffzellensystem nach Anspruch 4, **dadurch gekennzeichnet, dass** die Mittel zum Bilden von Sauerstoffgehaltsinformationen von der Gaszirkulation der Steueranordnung (128) einen ersten Sauerstoffsensor (130a), der sich zwischen den Mitteln (132) und dem Dampfreformer (107) befindet, und einen zweiten Sauerstoffsensor (130b) umfassen, der sich auf der anderen Seite des Dampfreformers (107) als der erste Sauerstoffsensor (130a) befindet.

6. Steueranordnung zum Steuern der Oxidation eines Dampfreformers (107) in einem Brennstoffzellensystem nach Anspruch 1, **dadurch gekennzeichnet, dass** die Mittel zum Bilden von Sauerstoffgehaltsinformationen von der Gaszirkulation der Steueranordnung (128) mindestens einen Rechner zum Durchführen von Vorausberechnungen verwenden, die ungefähre Schätzungen von Sauerstoffgehalten unter unterschiedlichen Druck- und Verdünnungsgasmengenbedingungen in der Steueranordnung ergeben, wobei diese ungefähren Schätzungen von Sauerstoffgehalten in den Steuermitteln (128) zum Steuern von Sauerstoffgehalt in der Gaszirkulation durch Steuern der Einlassmenge von Sauerstoff verwendet werden.

7. Steueranordnung zum Steuern der Oxidation eines Dampfreformers (107) in einem Brennstoffzellensystem nach Anspruch 1, **dadurch gekennzeichnet, dass** die Steuereinrichtung ein Entlüftungsventil (136) umfasst, das sich in einem Entlüftungsrohr (144) befindet, um gebildete Oxidationsprodukte von der Steueranordnung zu entlüften, um den Aufbau von Reaktionsprodukten zu verhindern.

8. Steueranordnung zum Steuern der Oxidation eines Dampfreformers (107) in einem Brennstoffzellensystem nach Anspruch 7, **dadurch gekennzeichnet, dass** die Mittel zum Bilden von Sauerstoffgehaltsinformationen von der Gaszirkulation der Steueranordnung (128) einen Sauerstoffsensor (130) umfassen, der sich in dem Entlüftungsrohr (144) befindet, um Sauerstoffgehaltsinformationen der Dampfreformer-Gaseinspeisung zu messen, wenn das Sauerstoffeinlassventil (126) offen ist, und um in den Steuermitteln (138) den Sauerstoffverbrauch auf der Grundlage des Gefälles des Sauerstoffgehalts zu berechnen, wenn das Sauerstoffeinlassventil geschlossen ist, wobei die bereitgestellte Stickstoffmenge für den Gasumlauf und das Volumen der Gaszirkulationsrohre bekannt sind.

9. Steueranordnung zum Steuern der Oxidation eines Dampfreformers (107) in einem Brennstoffzellensystem nach Anspruch 1, **dadurch gekennzeichnet, dass** die Steueranordnung einen Druckminderer (146) in der Stickstoffquellenverbindung (142) umfasst, um Sauerstoff in die Gaszirkulation der Steueranordnung (128) bereitzustellen.

10. Steueranordnung zum Steuern der Oxidation eines Dampfreformers (107) in einem Brennstoffzellensystem nach Anspruch 1, **dadurch gekennzeichnet, dass** die Steueranordnung (128) Temperaturanzeiger (134) umfasst, die sich innerhalb eines Katalysatorbetts des Dampfreformers (107) zum Verfolgen der Katalysatortemperatur zum Steuern des Sauerstoffeinlassventils (126) befinden, um die Oxidationsreaktionsrate und Temperaturbedingungen in dem Dampfreformer (107) innerhalb bestimmter Werte zu halten.

11. Verfahren zum Steuern der Oxidation eines Dampfreformers (107) in einem Brennstoffzellensystem, wobei in dem Verfahren Brennstoff in einer Hauptleitung (122) des Brennstoffzellensystems zum Strömen gebracht wird und der Brennstoff in eine Zusammensetzung umgewandelt wird, die sich für die Brennstoffzellen eignet, **dadurch gekennzeichnet, dass** bei der Oxidationssteuerung Gas in den Dampfreformer (107) und aus dem Dampfreformer (107) zum Zirkulieren gebracht wird, Sauerstoff bereitgestellt wird, Verdünnungsgas bereitgestellt wird, wobei der/das bereitgestellte Sauerstoff und Gas, der/das aus dem Dampfreformer (107) heraus zum Zirkulieren gebracht wird, in das bereitgestellte Verdünnungsgas gemischt werden, um eine Einspeisung von Oxidationsgas in den Dampfreformer (107) bereitzustellen, Sauerstoffgehaltsinformationen der Gaszirkulation gebildet werden und der Sauerstoffgehalt der Gaszirkulation durch Steuern von zumindest der Menge von bereitgestelltem Sauerstoff in die Einspeisung von Oxidationsgas zum Dampfreformer (107) auf der Grundlage der Sauerstoffgehaltsinformationen gesteuert wird.

12. Verfahren nach Anspruch 11, **dadurch gekennzeichnet, dass** in dem Verfahren die Hauptleitung (122) an mindestens einem der Orte vor dem Dampfreformer (107) und nach dem Dampfreformer geschlossen wird und die Oxidationssteuerung des Dampfreformers (107) in dem Brennstoffzellensystem nach dem Schließen der Hauptleitung (122) in Betrieb genommen wird.

13. Verfahren nach Anspruch 11, **dadurch gekennzeichnet, dass** in der Oxidationssteuerung das Mischen durch Ausstoßen eines Gemisches des bereitgestellten Sauerstoffs und des Gases durchgeführt wird, das aus dem Dampfreformer (107) heraus zirkuliert wird, derart, dass das bereitgestellte Verdünnungsgas unter Druck gesetzt wird und das unter Druck stehende Gas als Treibfluid zum Mitnehmen von Oxidationsgas in die Einspeisung zum Dampfreformer (107) verwendet wird.

14. Verfahren nach Anspruch 11, **dadurch gekennzeichnet, dass** Sauerstoffgehaltsinformationen von der Gaszirkulation unter Verwendung von mindestens einem Sauerstoffsensor (130) gebildet werden, der Sauerstoffgehalt von der Gaszirkulation an mindestens einer der Stellen vor und nach dem Dampfreformer (107) misst.

15. Verfahren nach Anspruch 11, **dadurch gekennzeichnet, dass** Sauerstoffgehaltsinformationen von der Gaszirkulation unter Verwendung eines ersten Sauerstoffsensors (130a), um Sauerstoffgehalt von der Gaszirkulation vor dem Dampfreformer (107) zu messen, und unter Verwendung eines zweiten Sauerstoffsensors (130b) gebildet werden, um Sauerstoffgehalt von der Gaszirkulation auf der anderen Seite des Dampfreformers (107) als der erste Sauerstoffsensor (130a) zu messen.

16. Verfahren nach Anspruch 11, **dadurch gekennzeichnet, dass** Sauerstoffgehaltsinformationen von der Gaszirkulation durch Durchführen von Vorausberechnungen gebildet werden, die ungefähre Schätzungen von Sauerstoffgehalten unter unterschiedlichen Druck- und Verdünnungsgasmengenbedingungen ergeben, und die ungefähren Schätzungen von Sauerstoffgehalten verwendet werden, um den Sauerstoffgehalt in der Gaszirkulation durch Steuern der Einlassmenge von Sauerstoff zu steuern.

17. Verfahren nach Anspruch 11, **dadurch gekennzeichnet, dass** gebildete Sauerstoffprodukte von der Gaszirkulation durch eine Entlüftung (136) entlüftet werden, um den Aufbau von Reaktionsprodukten zu verhindern.

18. Verfahren nach Anspruch 11, **dadurch gekennzeichnet, dass** Sauerstoffgehaltsinformationen von der Gaszirkulation unter Verwendung eines Sauerstoffsensors (130) gebildet werden, der sich in einem Entlüftungsrohr (144) befindet und Sauerstoffgehaltsinformationen von der Dampfreformergaseinspeisung misst, wenn Sauerstoff eingespeist wird, und der Sauerstoffverbrauch auf der Grundlage des Gefälles des Sauerstoffgehalts berechnet wird, wenn kein Sauerstoff eingespeist wird, wobei die bereitgestellte Stickstoffmenge für die Gaszirkulation und das Volumen der Gaszirkulationsrohre bekannt sind.

19. Verfahren nach Anspruch 11, **dadurch gekennzeichnet, dass** der Druck in einer Stickstoffquellenverbindung (142) vermindert (146) wird, um Stickstoff in die Gaszirkulation bereitzustellen.

20. Verfahren nach Anspruch 11, **dadurch gekennzeichnet, dass** die Temperatur eines Katalysatorbetts des Dampfreformers (107) verfolgt wird, um den Einlass von Sauerstoff zu steuern, um die Oxidationsreaktionsrate und Temperaturbedingungen in dem Dampfreformer (107) innerhalb bestimmter Werte zu halten.

## Revendications

1. Système de commande pour commander l'oxydation d'un réformeur à vapeur (107) dans un système de piles à combustible, chaque pile à combustible dans le système de piles à combustible comprenant un côté anode (100), un côté cathode (102), et un électrolyte (104) entre le côté anode et le côté cathode, et le système de piles à combustible comprenant une canalisation principale (122) pour faire s'écouler le combustible dans le système de piles à combustible et le réformeur à vapeur (107) afin de convertir le combustible en une composition adaptée aux piles à combustible, **caractérisé en ce que** le système de commande (128) comprend une source d'oxygène (123) pour fournir de l'oxygène dans le système de commande (128), une source de gaz de dilution (124) pour fournir du gaz de dilution dans le système de commande (128), un moyen (132) connecté à la source d'oxygène (123) tout comme à la source de gaz de dilution (124) afin de mélanger l'oxygène de la source d'oxygène (123) et du gaz remis en circulation à partir du réformeur à vapeur (107) dans le système de commande (128) avec un gaz de dilution de la source de gaz de dilution (124) afin de fournir une alimentation en gaz d'oxydation du réformeur à vapeur (107), un moyen pour former de l'information sur la teneur d'oxygène à partir de la circulation de gaz du système de commande (128), et un moyen de commande (138) pour commander la teneur en oxygène de la circulation de gaz en commandant au moins la quantité d'oxygène fournie dans l'alimentation en gaz d'oxydation du réformeur à vapeur (107) sur la base de l'information sur la teneur en oxygène.

2. Système de commande pour commander une oxydation d'un réformeur à vapeur (107) dans un système de piles à combustible selon la revendication 1, **caractérisé en ce que** le système de commande comprend un moyen (120) pour fermer la canalisation principale (122) au moins à l'un des emplacements avant le réformeur à vapeur (107) et après le réformeur à vapeur, et le système de commande (128) étant mis en service dans le système de piles à combustible après ladite fermeture de la canalisation principale (122).

3. Système de commande pour commander l'oxydation d'un réformeur à vapeur (107) dans un système de piles à combustible selon la revendication 1, **caractérisé en ce que** le moyen (132) pour mélanger comprend un éjecteur (132) utilisant du gaz d'une source de gaz de dilution pressurisée (124) en tant que fluide moteur afin d'entrainer, dans l'alimentation en gaz d'oxydation du réformeur à vapeur (107), un mélange de gaz de la source d'oxygène (123) et de gaz remis en circulation à partir du réformeur à vapeur (107).

4. Système de commande pour commander l'oxydation d'un réformeur à vapeur (107) dans un système de piles à combustible selon la revendication 1, **caractérisé en ce que** le moyen pour former l'information sur la teneur d'oxygène à partir de la circulation de gaz du système de commande (128) comprend au moins un capteur d'oxygène (130) pour mesurer la teneur en oxygène d'après la circulation de gaz au moins à l'un des emplacements avant et après le réformeur à vapeur (107).

5. Système de commande pour commander l'oxydation d'un réformeur à vapeur (107) dans un système de piles à combustibles selon la revendication 4, **caractérisé en ce que** le moyen pour former l'information sur la teneur d'oxygène d'après la circulation de gaz du système de commande (128) comprend un premier capteur d'oxygène (130a) situé entre le moyen (132) et le réformeur à vapeur (107), et un deuxième capteur d' oxygène (130b) situé de l'autre côté du réformeur à vapeur (107) en tant que premier capteur d'oxygène (130a).

6. Système de commande pour commander l'oxydation d'un réformeur à vapeur (107) dans un système de piles à combustible selon la revendication 1, **caractérisé en ce que** le moyen pour former l'information sur la teneur d'oxygène d'après la circulation de gaz du système de commande (128) utilise au moins un ordinateur pour effectuer des calculs de progression donnant des évaluations approximatives de teneurs en oxygène dans différentes conditions de pression et de quantité de gaz de dilution dans le système de commande, lesdites évaluations approximatives des teneurs d'oxygène étant utilisées dans le moyen de commande (128) afin de commander la teneur en oxygène dans la circulation de gaz en commandant la quantité d'admission d'oxygène.

7. Système de commande pour commander l'oxydation d'un réformeur à vapeur (107) dans un système de piles à combustible selon la revendication 1, **caractérisé en ce que** le système de commande comprend une soupape de purge (136) située dans un tuyau de purge (144) afin d'évacuer des produits d'oxydation formés du système de commande afin d'éviter la formation de produits de réaction.

8. Système de commande pour commander l'oxydation d'un réformeur à vapeur (107) dans un système de piles à combustible selon la revendication 7, **caractérisé en ce que** le moyen pour former l'information sur la teneur d'oxygène d'après la circulation de gaz du système de commande (128) comprend un capteur d'oxygène (130) situé dans le tuyau de purge (144) afin de mesurer l'information sur la teneur en oxygène de l'alimentation en gaz du réformeur à vapeur lorsque la soupape d' admission d' oxygène (126) est ouverte et de calculer, dans le moyen de commande (138), la consommation d'oxygène sur la base du taux de chute de la teneur en oxygène lorsque la soupape d'admission d'oxygène est fermée en connaissance de la quantité d'azote fournie à la circulation de gaz et du volume des tuyaux de circulation de gaz.

9. Système de commande pour commander l'oxydation d'un réformeur à vapeur (107) dans un système de piles à combustible selon la revendication 1, **caractérisé en ce que** le système de commande comprend un réducteur de pression (146) dans la connexion de la source d'azote (142) afin de fournir de l'azote dans la circulation de gaz du système de commande (128).

10. Système de commande pour commander l'oxydation d'un réformeur à vapeur (107) dans un système de piles à combustible selon la revendication 1, **caractérisé en ce que** le système de commande (128) comprend des indicateurs de température (134) situés à l'intérieur d'un lit de catalyseur du réformeur à vapeur (107) afin de suivre la température du catalyseur pour commander la soupape d'admission d' oxygène (126) afin de garder la vitesse de réaction d'oxydation et les conditions de température dans le réformeur à vapeur (107) dans les limites de valeurs déterminées.

11. Procédé pour commander l'oxydation d'un réformeur à vapeur (107) dans un système de piles à combustible, dans lequel procédé on fait s'écouler du combustible dans une canalisation principale (122) du système de piles à combustible, et le combustible étant converti en une composition adaptée aux piles à combustible, **caractérisé en ce que**, lors de la commande de l'oxydation, on fait circuler du gaz vers l'intérieur du réformeur à vapeur (107) et vers l'extérieur du réformeur à vapeur (107), de l'oxygène étant fourni, du gaz de dilution étant fourni, l'oxygène et le gaz fournis mis en circulation vers l'extérieur du réformeur à vapeur (107) étant mélangés audit gaz de dilution fourni afin de fournir l'alimentation en gaz d'oxydation du réformeur à vapeur (107), de l'information sur la teneur d'oxygène de la circulation de gaz étant formée, et la teneur en oxygène de la circulation de gaz étant commandée en commandant au moins la quantité d'oxygène fournie dans l'alimentation en gaz d'oxydation du réformeur à vapeur (107) sur la base de l'information sur la teneur en oxygène.

12. Procédé selon la revendication 11, **caractérisé en ce que**, dans le procédé, la canalisation principale (122) est fermée au moins à l'un des emplacements avant le réformeur à vapeur (107) et après le réformeur à vapeur, et la commande de l'oxydation du réformeur à vapeur (107) étant mise en service dans le système de piles à combustible après ladite fermeture de la canalisation principale (122).

13. Procédé selon la revendication 11, **caractérisé en ce que**, lors de la commande de l'oxydation, ledit mélange est effectué en éjectant un mélange d'oxygène fourni et de gaz mis en circulation vers l'extérieur du réformeur à vapeur (107) de manière à ce que le gaz de dilution fourni soit pressurisé et que le gaz pressurisé soit utilisé en tant que fluide moteur pour l'entraînement dans l'alimentation en gaz d'oxydation du réformeur à vapeur (107).

14. Procédé selon la revendication 11, **caractérisé en ce que** l'information sur la teneur d'oxygène à partir de la circulation de gaz est formée en utilisant au moins un capteur d'oxygène (130) qui mesure la teneur en oxygène d'après la circulation de gaz au moins à l'un des emplacements avant et après le réformeur à vapeur (107).

15. Procédé selon la revendication 11, **caractérisé en ce que** l'information sur la teneur d'oxygène d'après la circulation de gaz est formée en utilisant un premier capteur d'oxygène (130a) pour mesurer une teneur en oxygène d'après la circulation de gaz avant le réformeur à vapeur (107) et en utilisant un deuxième capteur d'oxygène (130b) afin de mesurer une teneur en oxygène d'après la circulation de gaz de l'autre côté du réformeur à vapeur (107) en tant que le premier capteur d'oxygène (130a).

16. Procédé selon la revendication 11, **caractérisé en ce qu'** une information sur la teneur d'oxygène d'après la circulation de gaz est formée en effectuant des calculs de progression qui donnent des évaluations approximatives de teneurs en oxygène dans différentes conditions de pression et de quantité gaz de dilution, et lesdites évaluations approximatives des teneurs en oxygène étant utilisées pour commander la teneur en oxygène dans la circulation de gaz en commandant la quantité d'admission d'oxygène.

17. Procédé selon la revendication 11, **caractérisé en ce que** des produits d'oxydation formés sont évacués de la circulation de gaz via un dispositif de purge (136) afin d'éviter la formation de produits de réaction.

18. Procédé selon la revendication 11, **caractérisé en ce que** l'information sur la teneur d'oxygène est formée d'après la circulation de gaz en utilisant un capteur d'oxygène (130) qui se situe dans un tuyau de purge (144) et mesure l'information sur la teneur d'oxygène de l'alimentation en gaz du réformeur à vapeur lorsque de l'oxygène est fourni, et la consommation d'oxygène étant calculée sur la base du taux de chute de la teneur en oxygène lorsqu'il n'y a pas d'alimentation en oxygène en connaissance de la quantité d'azote fournie à la circulation de gaz et du volume des tuyaux de circulation de gaz.

19. Procédé selon la revendication 11, **caractérisé en ce que** la pression est réduite (146) dans une connexion de source d'azote (142) afin de fournir de l'azote dans la circulation de gaz.

20. Procédé selon la revendication 11, **caractérisé en ce que** la température d'un lit de catalyseur du réformeur à vapeur (107) est suivie afin de commander l'admission d'oxygène afin de garder la vitesse de réaction d'oxydation et les conditions de température dans le réformeur à vapeur (107) dans les limites de valeurs déterminées.
